Europäisches Patentamt

European Patent Office

Office européen des brevets

(11) Numéro de publication: **0 119 330**
**B1**

(12) **FASCICULE DE BREVET EUROPEEN**

(45) Date de publication du fascicule du brevet: **01.04.87**

(51) Int. Cl.⁴: **C 25 C 7/00**, B 65 G 49/04

(21) Numéro de dépôt: **83201838.6**

(22) Date de dépôt: **23.12.83**

(54) **Collecteur de gouttes pour un appareil pour transporter des électrodes.**

(30) Priorité: **22.02.83 LU 84654**

(43) Date de publication de la demande:
**26.09.84 Bulletin 84/39**

(45) Mention de la délivrance du brevet:
**01.04.87 Bulletin 87/14**

(84) Etats contractants désignés:
**DE GB IT SE**

(56) Documents cités:
**FR-A-2 099 272**

(73) Titulaire: **METALLURGIE HOBOKEN-OVERPELT**
**Société anonyme dite:**
**A. Greinerstraat, 14**
**B-2710 Hoboken (BE)**

(72) Inventeur: **Verhoeven, Constant Theresia**
**Baan 70**
**B-2419 Poederlee (BE)**
Inventeur: **Viellefont, Jean François**
**Oosterhoven 4**
**B-2270 Herenthout (BE)**
Inventeur: **Dierckxsens, Robert**
**Leemanslaan 33**
**B-2430 Olen (BE)**

(74) Mandataire: **Saelemaekers, Juul et al**
**METALLURGIE HOBOKEN-OVERPELT A.**
**Greinerstraat 14**
**B-2710 Hoboken (BE)**

## Description

La présente invention se rapporte à un collecteur de gouttes pour un appareil pour transporter des électrodes dégouttantes, par exemple des électrodes sorties d'une cuve électrolytique, cet appareil comprenant un chariot et un palonnier pour électrodes suspendu à ce chariot.

Un collecteur de gouttes connu pour un tel appareil est constitué d'une paire d'assiettes géantes et de moyens d'actionnement articulés fixés au chariot pour amener ces assiettes d'une position de repos, où elles se trouvent de part et d'autre du groupe d'électrodes suspendu au palonnier, à une position de travail, où elles se trouvent en-dessous de ce groupe d'électrodes, et vice versa. Ce collecteur de gouttes est encombrant et il gêne de ce fait l'opérateur de l'appareil de transport et les travailleurs occupés dans la salle d'électrolyse.

Le but de la présente invention est de fournir un collecteur de gouttes qui évite l'inconvénient du collecteur de gouttes connu.

Il est à remarquer que le brevet FR—A— 2 099 272 décrit une installation d'électrolyse comprenant un trolley mobile muni d'un système de levage pour transporter et pour lever ou descendre les pièces à travailler. Ce trolley porte en outre un bac-égouttoir qui est mobile par rapport à lui depuis une première position permettant de lever ou de descendre une pièce jusqu'à une deuxième position en-dessous d'une pièce levée. Le brevet signale que ce bac-égouttoir peut, par exemple, être constitué d'un rouleau fermant, qui peut obturer le fond du trolley.

Le collecteur de gouttes selon l'invention comprend

— une série de gouttières comprenant chacune au moins un orifice d'écoulement, ces gouttières étant disposées avec leurs axes longitudinaux parallèles les uns aux autres de manière à former une file perpendiculairement par rapport aux axes susdits,

— des moyens pour déplacer la série de gouttières perpendiculairement par rapport aux axes susdits, dans l'un et l'autre sens, entre une position inférieure et sensiblement horizontale dite de travail, dans laquelle la série de gouttières est disposée en-dessous des électrodes, et une position supérieure et sensiblement verticale dite de repos, dans laquelle les gouttières sont superposées selon leurs parois longitudinales, via une position intermédiaire dans laquelle la série de gouttières parcourt un chemin coudé,

— un réservoir ayant une entrée située en dessous des orifices d'écoulement des gouttières, lorsque la série de gouttières est en position de travail; et

— un châssis qui est fixé au chariot et dans lequel sont montés les moyens et le réservoir susdits.

D'autres détails et particularités de l'invention ressortiront de la description, donnée ci-après à titre d'exemple non limitatif et avec référence aux dessins ci-annexés, d'un mode de réalisation de l'appareil selon l'invention.

Dans ces dessins:

— la figure 1 est une vue en plan schématique d'une salle d'électrolyse comprenant des cuves d'électrolyse et une installation de transport pour transporter des électrodes devant subir l'électrolyse vers les cuves d'électrolyse et pour évacuer des cuves d'électrolyse des électrodes ayant subi l'électrolyse;

— la figure 2 est une vue latérale agrandie de l'installation de transport de la figure 1, cette installation comprenant un palonnier pour électrodes et d'un collecteur de gouttes selon l'invention;

— la figure 3 est une vue agrandie en élévation latérale du palonnier pour électrodes et du collecteur de gouttes de la figure 2;

— la figure 4 représente une coupe selon la ligne IV—IV à travers le collecteur de gouttes de la figure 3;

— la figure 5 est une vue agrandie et plus détaillée de l'extrémité de gauche du collecteur de gouttes de la figure 4;

— la figure 6 est une vue agrandie et plus détaillée d'une partie du collecteur de gouttes de la figure 3 au moment où une série de gouttières est en position intermédiaire;

— la figure 7 est une vue agrandie et plus détaillée de la partie centrale du collecteur de gouttes de la figure 3;

— la figure 8 est une vue en plan d'une partie du collecteur de gouttes de la figure 7;

— la figure 9 représente une variante de l'installation de transport de la figure 2; et

— la figure 10 représente une variante du collecteur de gouttes de la figure 4.

Dans les différentes figures les mêmes notations de référence désignent des éléments identiques.

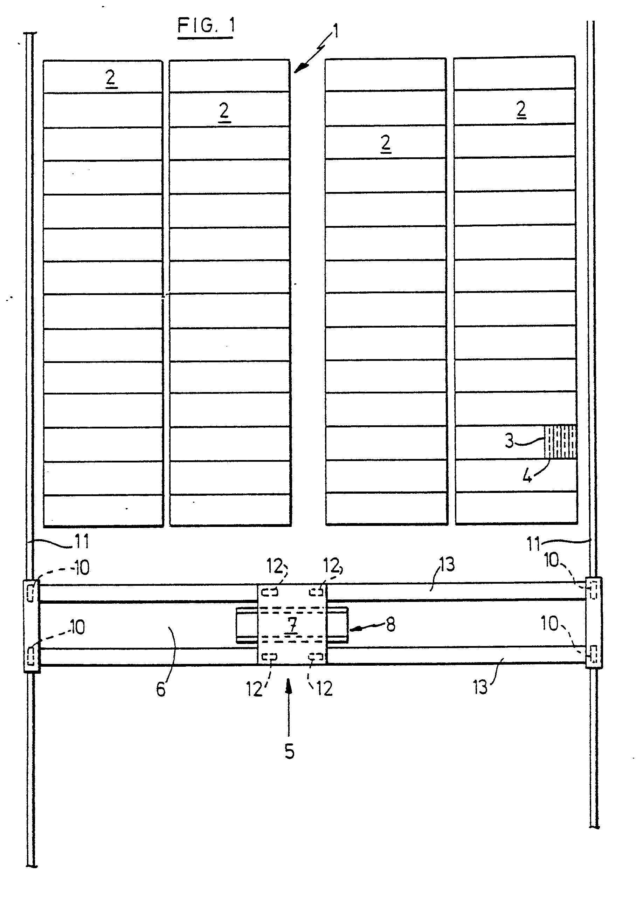

Comme montré à la figure 1, la salle d'électrolyse 1 comprend plusieurs rangées parallèles de cuves d'électrolyse rectangulaires 2 situées côte à côte. Chaque cuve d'électrolyse 2 comprend un groupe de cathodes 3 et alternant avec celui-ci un groupe d'anodes 4.

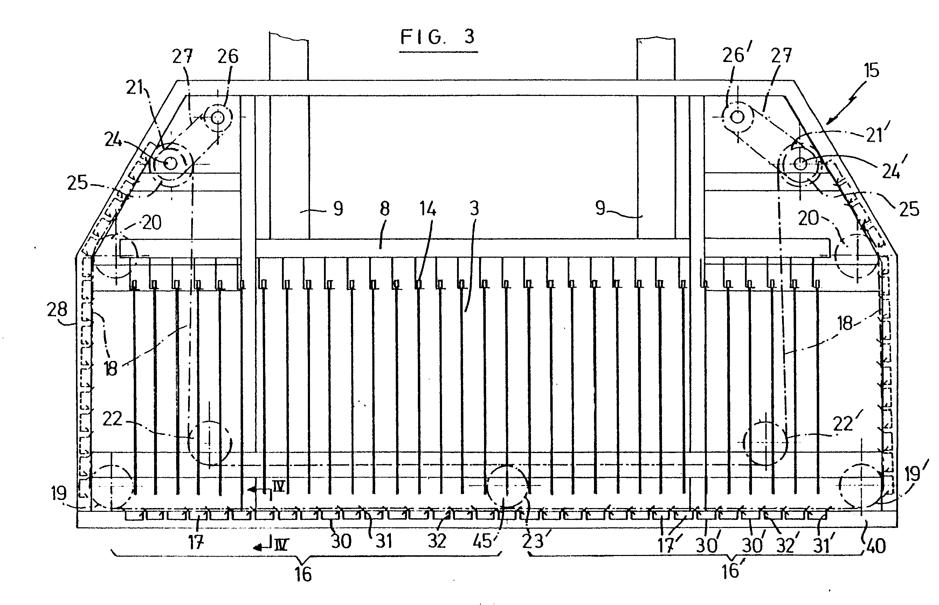

Ces électrodes sont suspendues verticalement à distance égale et transversalement par rapport à l'axe longitudinal de la cuve. Elles sont constituées d'une plaque de métal munie d'éléments (oreilles, barre de suspension, ouvertures) permettant leur suspension dans les cuves 2 et leur manutention par un palonnier. Un électrolyte approprié coule à travers les cuves 2 et un courant électrique approprié passe à travers les cuves. La salle d'électrolyse 1 comprend, en outre, une installation de transport 5 pour électrodes. Celle-ci comprend un pont roulant 6 muni d'un chariot 7 qui porte un dispositif de levage connu en soi et non représenté auquel est suspendu un palonnier 8 avec éléments de guidage 9 (voir figure 3). Ce palonnier 8, qui est selon les besoins soit un palonnier pour cathodes, soit un palonnier pour anodes, soit un palonnier pour cathodes et anodes, peut donc être déplacé verticalement. Le pont roulant 6, muni de roues 10 et actionné par un moteur non représenté, peut se déplacer suivant un mouvement de va-et-vient sur des rails 11 parallèlement aux rangées de cuves.

Le chariot 7, muni de roues 12 et actionné par un moteur non représenté, peut se déplacer suivant un mouvement de va-et-vient sur des rails 13 qui sont fixés au pont 6, transversalement aux rangées de cuves. L'installation de transport 5 entre en action lorsque les électrodes 3 et/ou 4 dans les cuves 2 doivent être remplacées par des électrodes jeunes, par exemple lorsque les cathodes 3 doivent être remplacées par des cathodes de départ.

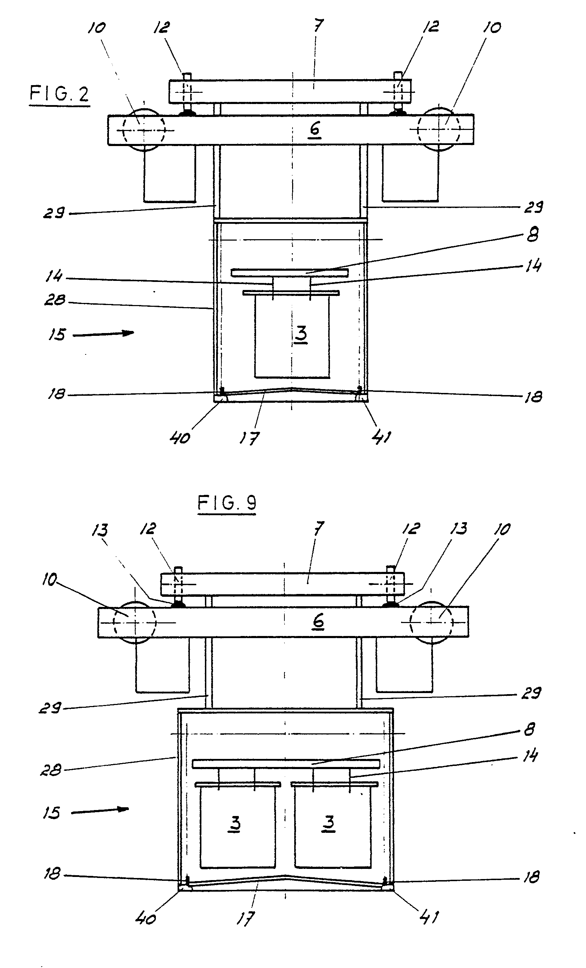

Un palonnier 8 pour cathodes, par exemple un palonnier classique à crochets 14 (voir figures 2 et 3) est alors amené au-dessus d'une cuve 2 à l'aide du pont 6 et du chariot 7. On fait descendre le palonnier 8, on accroche les cathodes 3 et on remonte le palonnier avec les cathodes 3. On transporte ensuite, à l'aide du pont 6 et du chariot 7, le palonnier 8 remonté avec les cathodes 3 y accrochées vers un poste de traitement de cathodes ayant subi l'électrolyse. Pendant qu'on transporte ainsi les cathodes 3, de l'électrolyte dégoutte de celles-ci. Pour éviter que cet électrolyte, qui est généralement constitué d'un liquide corrosif, ne tombe sur le sol de la salle d'électrolyse 1 ou sur l'appareillage contenu dans cette salle, l'installation de transport 5 est équipée d'un collecteur de gouttes 15.

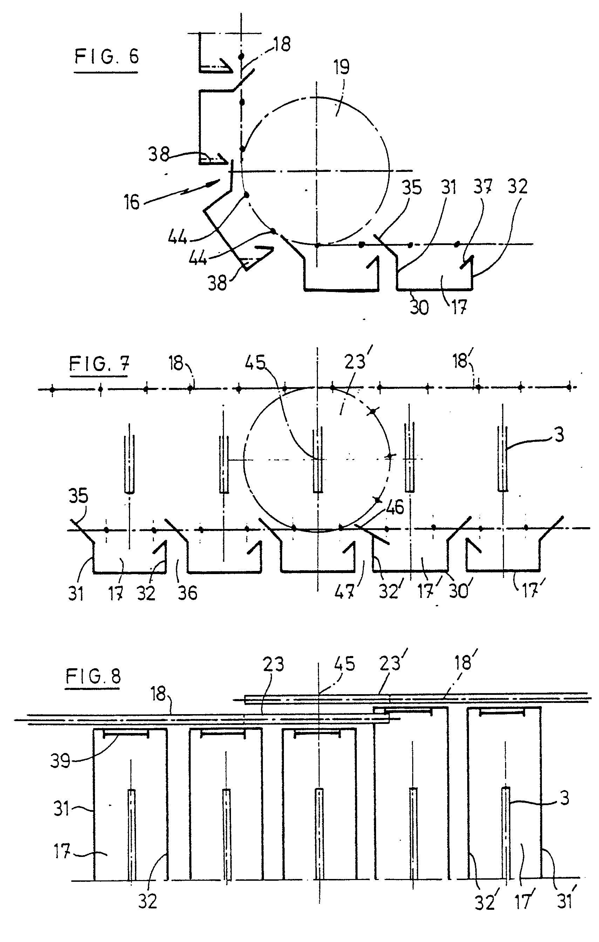

Le collecteur de gouttes 15 comprend deux séries 16 et 16' de gouttières 17 et 17' parallèles (voir figure 3). La série 16 de gouttières 17 est portée par une paire de chaînes sans fin mobiles 18 (figures 2, 3 et 4). Chaque chaîne 18 est portée par un jeu de roues dentées 19, 20, 21, 22 et 23 (figures 3 et 8). Les deux roues 21 sont montées sur un arbre 24 qui est muni d'une roue dentée d'entraînement 25 actionné par un moteur 26 par l'intermédiaire d'une chaîne 27. Les roues dentées 19, 20, 22 et 23 tournent librement autour d'arbres non représentés. Les arbres précités ainsi que le moteur 26 sont montés dans un chassis 28, qui est rigidement fixé par l'intermédiaire des poutres 29 au chariot 7 (figure 2).

Lorsque le moteur 26 fait tourner les roues 21 dans le sens des aiguilles d'une montre, la série de gouttières 16 passe d'une position inférieure de travail, dans laquelle les gouttières sont juxtaposées et disposées en-dessous des électrodes 3, via une position intermédiaire, où elle est courbée (figure 6), à une position supérieure de repos montrée en pointillés à la figure 3, dans laquelle les gouttières 17 sont superposées. Lorsqu'ensuite le moteur 26 fait tourner les roues 21 en sens inverse, la série 16 est ramenée par les chaînes 18 dans sa position inférieure de travail.

Chaque gouttière 17 comprend un fond 30, une paroi longitudinale avant 31, une paroi longitudinale arrière 32 et deux parois latérales 33 et 34.

La paroi longitudinale avant 31 est celle qui est à un niveau plus élevé lorsque la série de gouttières 16 est en position de repos, et le parois longitudinale arrière est celle qui est à ce moment à un niveau moins élevé. Comme montré aux figures 3, 6 et 7, la partie supérieure 35 de la paroi longitudinale avant 31 est inclinée vers l'extérieur de la gouttière 17 de manière à former un appentis au-dessus de l'espace 36 existant entre la partie inférieure de cette paroi et la paroi longitudinale arrière 32 de la gouttière qui précède immédiatement la gouttière considérée. La partie supérieure 37 de la paroi longitudinale arrière 32 de la gouttière 17 est inclinée vers l'intérieur de la gouttière de manière que la gouttière 17 puisse retenir de l'électrolyte 38, lorsque la série de gouttières 16 est en position de repos (voir figure 6).

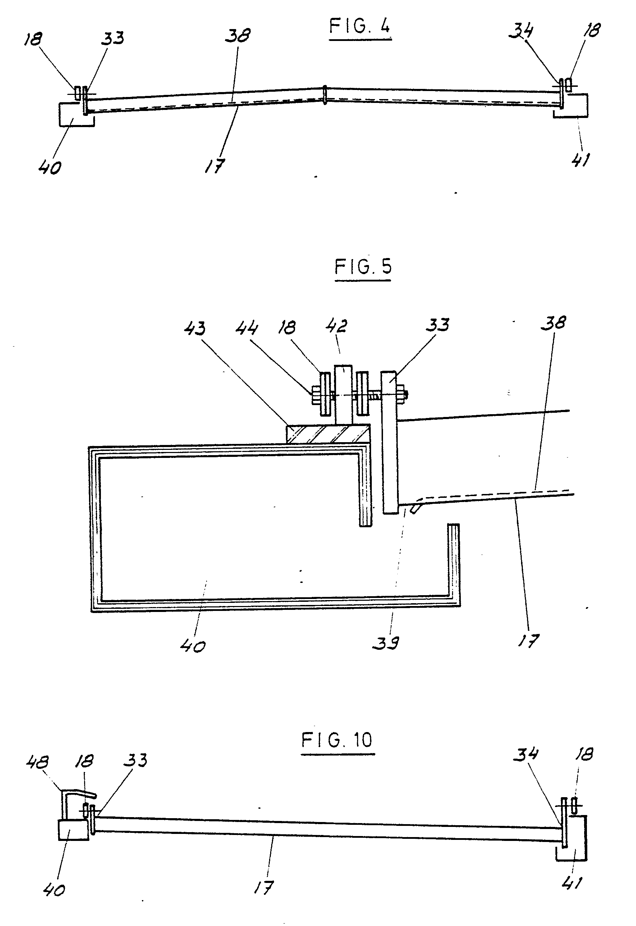

Un orifice 39 pour évacuer l'électrolyte 38 est prévu aux deux extrémités de la gouttière 17 dans le fond 30 de celle-ci (figures 4 et 5). L'électrolyte 38 s'écoule via les orifices 39 dans les réservoirs 40 et 41, qui constituent également des longerons inférieurs du châssis 28. Les orifices 39 sont distants de la paroi longitudinale arrière 32 (voir figure 8) de manière que cette paroi puisse former ensemble avec le fond 30 et les parois latérales 33 et 34 un réservoir provisoire pour l'électrolyte 38 lorsque la gouttière 17 est en position de repos (voir figure 6). Pour éviter une stagnation de l'électrolyte dans la gouttière 17, celle-ci est constitué de deux parties montant vers son centre comme montré à la figure 4.

Les chaînes 18 sont des chaînes à axes creux avec galets 42. De telles chaînes sont disponibles dans le commerce. Un élément 43 pour supporter et/ou guider les galets 42 du brin inférieur des chaînes 18 peut être prévu sur les réservoirs 40 et 41. La paroi latérale de gauche 33 de la gouttière 17 est reliée à la chaîne 18 de gauche par deux boulons 44 traversant deux axes successifs de la chaîne 18. La paroi latérale de droite 34 de la gouttière 17 est relié de la même façon à la chaîne 18 de droite (figures 4, 5 et 6).

Come la série 16 de gouttières 17 de gauche, la série 16' de gouttières 17' de droite est portée par un jeu de roues dentées 19', 20', 21', 22', et 23'. Les deux roues 21' sont montées sur un arbre 24' qui est muni d'une roue dentée d'entraînement 25' actionnée par un moteur 26' par l'intermédiaire d'une chaîne 27'. Les roues dentées 19', 20' et 22' tournent librement autour d'arbres non représentés. Les arbres précités ainsi que le moteur 26' sont montés dans le châssis 28. La première roue dentée 23' tourne librement autour de l'arbre de la première roue dentée 23 et la seconde roue dentée 23' tourne librement autour de l'arbre de la seconde roue dentée 23. Les deux paires de roues dentées 23 et 23' ont donc un axe géométrique horizontal commun 45 de manière que les séries de gouttières 16 et 16' puissent former un seul ensemble collecteur lorsqu'elles sont en position de travail (voir figure 3, 7 et 8). La distance entre la paire de chaînes 18 doit donc être différente de celle entre la paire de chaînes 18'. Dans le présent cas, la distance entre la paire de chaînes 18' est plus grande que la distance entre la paire de chaînes 18; les gouttières 17' sont plus longues que les gouttières 17 (voir figure 8) de manière que le même type de boulon 44 puisse être utilisé pour monter les gouttières 17 et 17' respectivement sur les chaînes 18 et 18'.

Abstraction faite de la différence en longueur, une gouttière 17' est l'image réfléchie d'une gouttière 17.

Comme montré aux figures 3 et 7, la gouttière 17' par laquelle se termine la série 16' se distingue des autres gouttières 17' en ce que sa paroi longitudinale arrière 32' est surmontée d'un appentis 46 qui s'étend de part et d'autre de cette paroi. La partie supérieure de l'appentis 46 s'étend au-dessus de l'espace 47 existant entre les séries 16 et 16', lorsque celles-ci sont en position de travail, de manière qu'à ce moment un ensemble collecteur étanche soit formé. La partie inférieure de l'appentis 46 s'étend au-dessus du fond 30' de la gouttière de manière que cette gouttière finale puisse retenir de l'électrolyte 38, tout comme les autres gouttières 17', lorsque la série de gouttières 16' est en position de repos.

Le collecteur de gouttes 15 fonctionne comme suit. Les séries de gouttières 16 et 16' sont en position de repos lorsqu'on fait descendre le palonnier 8 pour prendre les cathodes 3 et lorsqu'on remonte le palonnier 8 chargé de cathodes 3. Dès que le palonnier 8 chargé de cathodes 3 atteint sa position élevée de transport (montrée dans la figure 2), on amène les séries 16 et 16' dans leur position de travail. Le transport du palonnier chargé, à l'aide du pont 6 et du chariot 7, peut maintenant commencer. L'électrolyte 38 dégouttant des cathodes 3 durant ce transport arrive via les gouttières 17 et 17' dans les réservoirs 40 et 41, d'où il peut être soutiré de temps en temps par des moyens connus en soi et non représentés. Lorsque le palonnier 8 chargé de cathodes 3 est arrivé à destination, les séries de gouttières 16 et 16' sont ramenées dans leurs positions de repos. L'électrolyte 38, qui se trouve encore dans les gouttières 17, 17' au moment où les séries de gouttières 16, 16' passent de leur position de travail à leur position de repos, s'écoule à ce moment vers la paroi longitudinale arrière 32, 32' des gouttières et il reste retenu dans le réservoir formé par cette paroi, par le fond 30, 30' et par les parois latérales 33 et 34, 33' et 34 (voir figure 6) jusqu'à ce que les séries 16 et 16' retournent de nouveau à leur position de travail.

Il doit être entendu que l'invention n'est nullement limitée à la forme de réalisation décrite ci-avant et que de nombreuses modifications peuvent y être apportées.

Par exemple, au lieu de prévoir deux séries 16 et 16' de gouttières, on peut prévoir une seule série 16 ou 16', lorsque l'appareil de transport 5 est muni d'un palonnier ayant une longueur sensiblement plus faible que le palonnier 8 montré à la figure 3, par exemple un palonnier à seize paires de crochets 14. Lorsque l'appareil de transport 5 est muni d'un double palonnier, tel que décrit par exemple dans le brevet EP—B—0044594, il suffit de prévoir des gouttières 17, 17' plus longues comme montré à la figure 9.

Au lieu d'utiliser des gouttières 17 à double pente comme montré à la figure 4, on peut utiliser une gouttière 17, 17' dont le fond descend sur toute sa longueur vers une des deux parois latérales, par exemple vers la paroi latérale de droite 34, comme montré à la figure 10. Cette gouttière a un seul orifice d'écoulement, qui est situé à l'extrémité inférieure de la gouttière, et le longeron 40 de gauche ne doit donc pas fonctionner comme réservoir.

Il est également possible de prévoir des moyens d'aspersion, par exemple en 48 à la figure 10, pour nettoyer de temps en temps les gouttières, ce qui peut être utile lorsque l'électrolyte 38 contient une phase solide, notamment de la boue d'électrolyse.

**Revendications**

1. Collecteur de gouttes (15) pour un appareil (5) pour transporter des électrodes (3) dégouttantes, cet appareil (5) comprenant un chariot (7) et un palonnier (8) pour électrodes, suspendu à ce chariot (7), ce collecteur de gouttes étant caractérisé en ce qu'il comprend:

— une série (16) de gouttières (17) comprenant chacune au moins un orifice d'écoulement (39), ces gouttières étant disposées avec leurs axes longitudinaux parallèles les uns aux autres de manière à former une file perpendiculairement par rapport aux axes susdits,

— des moyens (18 à 27, 44) pour déplacer la série de gouttières perpendiculairement par rapport aux axes susdits, dans l'un et l'autre sens, entre une position inférieure et sensiblement horizontale dite de travail, dans laquelle la série de gouttières est disposée en-dessous des électrodes, et une position supérieure sensiblement verticale dite de repos, dans laquelle les gouttières sont superposées selon leurs parois longitudinales, via une position intermédiaire dans laquelle la série de gouttières parcourt un chemin coudé,

— un réservoir (40, 41) ayant une entrée située en dessous des orifices d'écoulement des gouttières, lorsque la série de gouttières est en position de travail; et

— un châssis (28) qui est fixé au chariot et dans lequel sont montés les moyens et le réservoir susdits.

2. Collecteur de gouttes (15) selon la revendication 1, caractérisé en ce que

— les gouttières (17) comprennent un fond (30), une paroi longitudinale avant (31), une paroi longitudinale arrière (32), une première paroi latérale (33) et une seconde paroi latérale (34), la paroi longitudinale avant (31) étant à un niveau supérieur et la paroi longitudinale arrière (32) à un niveau inférieur lorsque la série de gouttières (16) est en position de repos, et

— les moyens (18 à 27, 44) susdits de déplacement de la série de gouttières comprennent

— une paire de chaînes sans fin (18), un brin de la première chaîne étant situé près des premières parois latérales (33) des gouttières (17) et le brin correspondant de la seconde chaîne étant situé près des secondes parois latérales (34) des gouttières (17),

— des moyens de liaison (44) pour relier le brin susdit de la première chaîne aux premières parois latérales (33) des gouttières et le brin susdit de la seconde chaîne aux secondes parois latérales (34) des gouttières,

— un jeu de roues dentées (19 à 23) pour supporter chacune des chaînes sans fin (18), et

— des moyens (24 à 27) pour entraîner les chaînes sans fin.

3. Collecteur de gouttes selon la revendication 2, caractérisé en ce que les chaînes sans fin (18) sont des chaînes à axes creux et les moyens de liaison comprennent pour chaque paroi latérale deux boulons (44) traversant deux axes successifs de la chaîne.

4. Collecteur de gouttes selon la revendication 3, caractérisé en ce que les chaînes à axes creux (18) sont des chaînes à galets (42) et le châssis (28) comprend des moyens (43) pour supporter les galets du brin inférieur des chaînes.

5. Collecteur de gouttes selon la revendication 2, caractérisé en ce que la partie supérieure (35) de la paroi longitudinale avant (31) est inclinée vers l'extérieur de la gouttière de manière à former un appentis au-dessus de l'espace (36) existant entre la partie inférieure de cette paroi (31) et la paroi longitudinale arrière (32) de la gouttière précédente.

6. Collecteur de gouttes selon la revendication 2 ou 5, caractérisé en ce que la partie supérieure (37) de la paroi longitudinale arrière (32) de la gouttière (17) est inclinée vers l'intérieur de la gouttière et l'orifice d'écoulement (39) est distant de cette paroi (32) de manière que la gouttière puisse retenir du liquide (38) lorsque la série de gouttières (16) est en position de repos.

7. Collecteur de gouttes selon l'une quelconque des revendications 2 à 6, caractérisé en ce que les gouttières (17) sont constituées de deux parties montant vers le centre de la gouttière, un orifice d'écoulement (39) est prévu aux deux extrémités de la gouttière dans le fond (30) de celle-ci, et le châssis (28) comprend deux longerons creux (40, 41) formant le réservoir susdit.

8. Collecteur de gouttes selon l'une quelconque des revendications 2 à 6, caractérisé en ce que le fond (30) de la gouttière (17) descend sur toute sa longueur vers une des deux parois latérales (33, 34) de la gouttière, un orifice d'écoulement (39) est prévu dans ce fond près de cette paroi, et le châssis (28) comprend un longeron creux (41) formant le réservoir susdit.

9. Collecteur de gouttes selon l'une quelconque des revendications 1 à 8, caractérisé en ce qu'il comprend une seconde série (16') de gouttières (17') et des moyens (18' à 27', 44) pour amener cette seconde série d'une position inférieure de travail à une position supérieure de repos et vice versa de manière que les deux séries de gouttières (16, 16') forment un ensemble collecteur, lorsqu'elles sont en position de travail, et qu'elles se fassent face lorsqu'elles sont en position de repos.

10. Collecteur de gouttes selon la revendication 9, caractérisé en ce qu'au voisinage de l'endroit où les deux séries de gouttières (16, 16') sont dans le prolongement l'une de l'autre dans leur position de travail, sont montées deux paires de roues dentées (23, 23') de renvoi des chaînes sans fin (18, 18'), ces roues dentées ayant un axe géométrique horizontal commun (45).

11. Collecteur de gouttes selon la revendication 9 ou 10, caractérisé en ce que la paroi longitudinale arrière (32') de la dernière gouttière de la seconde série (16') est surmontée d'un appentis (46) s'étendant de part et d'autre de cette paroi, la partie supérieure de cet appentis s'étendant au-dessus de l'espace (47) existant entre les deux séries de gouttières (16, 16') en position de travail.

12. Collecteur de gouttes selon l'une quelconque des revendications 1 à 11, caractérisé en ce qu'il comprend des moyens d'aspiration (48) pour nettoyer les gouttières.

**Patentansprüche**

1. Tropfensammler (15) für eine Elektroden-fördereinrichtung (5), mit der abtropfende Elektroden (2) gefördert werden, umfassend einen Wagen (7) und eine an dem Wagen (7) aufgehängte Aushebetraverse (8) für die Elektroden, wobei der Tropfensammler durch folgende Merkmale gekennzeichnet ist:

— eine Reihe (16) von Rinnen (17), von denen jede mindestens eine Abflussöffnung (39) hat und die mit ihren Längsachsen parallel zueinander angeordnet sind, so dass eine zu diesen Achsen senkrecht stehende Reihe gebildet ist,

— Mittel (18 bis 27, 44) zur senkrecht zu diesen Achsen gerichteten Verschiebung der Reihe von Rinnen in der einen oder der anderen Richtung zwischen einer unteren und nahezu horizontalen Arbeitsstellung, bei der die Reihe der Rinnen unterhalb der Elektroden angeordnet ist, und einer oberen nahezu vertikalen Ruhestellung, bei der die Rinnen gemäss ihrer Längswände übereinander angeordnet sind, wobei die Verschiebung über eine Zwischenstellung erfolgt, in der die Reihe der Rinnen einen Kurvenweg durchläuft,

— ein Reservoir (40, 41) mit einem Einlass unterhalb der Abflussöffnungen der Rinnen, wenn die Reihe der Rinnen in Arbeitsstellung ist, und

— ein am Wagen befestigtes Gestell (28), in das die genannten Mittel und das Reservoir montiert sind.

2. Tropfensammler (15) nach Anspruch 1, dadurch gekennzeichnet,

— dass die Rinnen einen Boden (30), eine vordere Längswand (31), eine hintere Längswand (32), eine erste Seitenwand (33) und eine zweite Seitenwand (34) aufweisen, wobei sich die vordere Längswand (31) in einem höheren Niveau und die hintere Längswand (32) in einem niedrigeren Niveau befindet, wenn die Reihe der Rinnen (16) in Ruhestellung ist, und

— dass die Mittel (18 bis 27, 44) zur Verschiebung der Reihe von Rinnen folgende Teile umfassen:

— ein Paar endloser Ketten (18), wobei ein Trumm der ersten Kette nahe der ersten Seitenwände (33) der Rinnen (17) und das entsprechende Trumm der zweiten Kette nahe der zweiten Seitenwände (34) der Rinnen (17) gelegen ist,

— Verbindungsmittel (44) zur Verbindung des genannten Trummes der ersten Kette mit den ersten Seitenwänden (33) der Rinnen und des genannten Trummes der zweiten Kette mit den zweiten Seitenwänden (34) der Rinnen,

— ein Satz von Zahnrädern (19 bis 23) als Träger für jede endlose Kette (18) und

— Mittel (24 bis 27) zum Antrieb der endlosen Ketten.

3. Tropfensammler nach Anspruch 2, dadurch gekennzeichnet, dass die endlosen Ketten (18) Ketten mit Hohlachsen sind und die Verbindungsmittel für jede Seitenwand zwei Bolzen (44) aufweisen, die zwei aufeinanderfolgende Kettenachsen durchqueren.

4. Tropfensammler nach Anspruch 3, dadurch gekennzeichnet, dass die Ketten mit Hohlachsen Rollenketten (42) sind und das Gestell (28) Mittel zum Tragen der Rollen des unteren Trummes der Ketten aufweist.

5. Tropfensammler nach Anspruch 2, dadurch gekennzeichnet, dass der obere Teil (35) der vorderen Längswand (31) nach der Aussenseite der Rinne geneigt ist, so dass eine Überdachung gebildet ist über dem Zwischenraum (36), der zwischen dem unteren Teil dieser Wand (31) und der hinteren Längswand (32) der vorhergehenden Rinne besteht.

6. Tropfensammler nach Anspruch 2 oder 5, dadurch gekennzeichnet, dass der obere Teil (37) der hinteren Längswand (32) der Rinne (17) nach der Innenseite der Rinne geneigt ist und die Abflussöffnung (39) von dieser Wand (32) so entfernt ist, dass die Rinne Flüssigkeit (38) zurückhalten kann, wenn die Reihe von Rinnen (16) in Ruhestellung ist.

7. Tropfensammler nach einem der Ansprüche 2 bis 6, dadurch gekennzeichnet, dass die Rinnen aus zwei zum Zentrum der Rinne ansteigenden Teilen bestehen und an beiden Enden der Rinne in deren Boden (30) eine Abflussöffnung vorgesehen ist und dass das Gestell (28) zwei hohle, das Reservoir bildende Holme (40, 41) aufweist.

8. Tropfensammler nach einem der Ansprüche 2 bis 6, dadurch gekennzeichnet, dass der Boden (30) der Rinne (17) über seine ganze Länge in Richtung einer der beiden Seitenwände (33, 34) der Rinne abfällt und eine Abflussöffnung (39) nahe dieser Seitenwand vorgesehen ist und dass das Gestell (28) einen hohlen Holm (41) als Reservoir aufweist.

9. Tropfensammler nach einem der Ansprüche 1 bis 8, gekennzeichnet durch eine zweite Reihe (16') von Rinnen (17') und Mittel (18' bis 27' und 44) zur Verschiebung dieser zweiten Reihe aus einer unteren Arbeitsstellung und in eine obere Ruhestellung und umgekehrt, so dass die beiden Reihen von Rinnen (16, 16') eine Sammlereinheit bilden, wenn sie in Arbeitsstellung sind und sich gegenüberstehen, wenn sie in Ruhestellung sind.

10. Tropfensammler nach Anspruch 9, dadurch gekennzeichnet, dass in Nähe des Ortes, wo die zwei Reihen von Rinnen (16, 16') eine in Verlängerung des anderen in ihrer Arbeitsstellung sind, zwei Paare von Zahnrädern (23, 23') als Vorgelege für die endlosen Ketten (18, 18') angeordnet sind, wobei diese Zähnräder eine gemeinsame geometrisch horizontale Achse (45) haben.

11. Tropfensammler nach Anspruch 9 oder 10, dadurch gekennzeichnet, dass die hintere Längswand (32') der letzten Rinne der zweiten Reihe (16') überragt wird von einer Überdachung (46), die sich beiderseits dieser Wand erstreckt, wobei der obere Teil dieser Überdachung sich oberhalb des Zwischenraumes (47) zwischen den beiden Reihen von Rinnen (16, 16') in ihrer Arbeitsstellung erstreckt.

12. Tropfensammler nach einem der Ansprüche 1 bis 11, gekennzeichnet durch eine Spritzeinrichtung (48) zur Reinigung der Rinnen.

**Claims**

1. A drop collector (15) for an apparatus (5) for conveying dripping electrodes (3), said apparatus (5) comprising a carriage (7) and a rack (8) for electrodes suspended to said carriage, said drop collector being characterized in that it comprises:

— a series (16) of gutters (17) comprising each at least one outlet orifice (39), these gutters being arranged with their longitudinal axes parallel one to another so as to form a file perpendicularly to said axes,

— means (18 to 27, 44) for moving the series of gutters perpendicularly to said axes, in both directions, from a lower and substantially horizontal so-called working position, in which the series of gutters is located under the electrodes, into a higher substantially vertical so-called rest position, in which the gutters are superposed according to their longitudinal walls, through an intermediary position, in which the series of gutters follows a curved path,

— a reservoir (40, 41) having an entry which is located under the outlet orifices of the gutters, when said series of gutters is in the work position, and

— a frame (28) fastened to the carriage of the conveying apparatus and in which said means for bringing and said reservoir are disposed.

2. Drop collector (15) according to claim 1, characterized in that

— the gutters (17) comprise a bottom (30), a longitudinal front wall (31), a longitudinal back wall (32), a first side wall (33) and a second side wall (34), the longitudinal front wall (31) being at a higher level and the longitudinal back wall (32) at a lower level, when said series of gutters (16) is in the rest position, and

— said means for moving the series of gutters (18 to 27, 44) comprise

— a pair of endless chains (18), a segment of the first chain being located near the first side walls (33) of the gutters (17) and the corresponding segment of the second chain being located near the second side walls (34) of the gutters (17),

— connection means (44) for connecting said segment of the first chain to the first side walls (33) of the gutters and said segment of the second chain to the second side walls (34) of the gutters,

— a set of toothed wheels (19 to 23) for carrying each of the endless chains (48), and

— means (24 to 27) for driving the endless chains.

3. Drop collector according to claim 2, characterized in that the endless chains (18) are hollow bearing pin chains and the connection means comprise for each side wall two bolts (44) passing through two successive pins of the chain.

4. Drop collector according to claim 3, characterized in that the hollow bearing pin chains (18) are equipped with rollers (42) and the frame (28) comprises means (43) for supporting the rollers of the lower run of the chains.

5. Drop collector according to claim 2, characterized in that the upper part (35) of the longitudinal front wall (31) is inclined to the exterior of the gutter so that a penthouse is formed over the space (36) that exists between the lower part of this wall (31) and the longitudinal back wall (32) of the preceding gutter.

6. Drop collector according to claim 2 or 5, characterized in that the upper part (37) of the longitudinal back wall (32) of the gutter (17) is inclined to the inside of the gutter and the outlet orifice (39) is remote from this wall (32) so that the gutter can retain liquid (38) when said series of gutters (16) is in the rest position.

7. Drop collector according to any of claims 2 to 6, characterized in that the gutters (17) comprise two parts rising to the centre of the gutter, outlet orifices (39) being provided at both ends in the bottom (30) of the gutter, and said frame (28) comprises two hollow beams (40, 41) forming said reservoir.

8. Drop collector according to any of claims 2 to 6, characterized in that the bottom (30) of the gutter (17) slopes over its whole length to one side wall (33 or 34) of the gutter, an outlet orifice (39) is provided in the bottom near said side wall, and said frame (28) comprises one hollow beam (41) forming said reservoir.

9. Drop collector according to any of claims 1 to 8, characterized in that it comprises a second series (16') of gutters (17') and means (18' to 27', 44) for bringing this second series from a lower work position to a higher rest position and vice versa so that both series of gutters (16, 16') form a collector unit, when they are in work position, and that they face each other when they are in rest position.

10. Drop collector according to claim 9, characterized in that it comprises in the vicinity of the place where both series of gutters (16, 16') abut in their work position, two pairs of toothed wheels (23, 23') which are mounted for returning the endless chains (18, 18'), these toothed wheels having a common horizontal geometric axis (45).

11. Drop collector according to claim 9 or 10, characterized in that the longitudinal back wall (32') of the last gutter of the second series (16') is surmounted by a penthouse (46) extending on both sides of this wall, the upper part of this penthouse extending over the space (47) that exists between both series of gutters (16, 16') in work position.

12. Drop collector according to any of the claims 1 to 11, characterized in that it comprises sprinkling means (48) to clean the gutters.

FIG. 1

FIG.2

FIG.9

FIG. 3

FIG. 4

FIG. 5

FIG. 10

FIG. 6

FIG. 7

FIG. 8